# FASCICULE DE BREVET EUROPEEN

(11) **EP 2 941 374 B1**
(45) Date de publication et mention de la délivrance du brevet: **11.10.2017**
(21) Numéro de dépôt: 13820830.1
(22) Date de dépôt: 19.12.2013
(51) Int. Cl.: B60W 30/20, B60W 20/00

(54) **PROCÉDÉ ET SYSTÈME DE CORRECTION D'OSCILLATIONS DE RÉGIME D'UN TRAIN ROULANT**
VERFAHREN UND SYSTEM ZUR KORREKTUR VON SCHWINGUNGEN EINES FAHRGESTELLS
METHOD AND SYSTEM FOR CORRECTING OSCILLATIONS OF REGIME OF A RUNNING GEAR

(30) Priorité: 07.01.2013 FR 1350092
(43) Date de publication de la demande: 11.11.2015
(73) Titulaire: PSA Automobiles SA, 78300 Poissy (FR)
(72) Inventeur: THOMAS, Mathieu, F-78220 Viroflay (FR); ZUMELLA, Franck, F-78400 Chatou (FR); CHARLES, Juliette, F-78510 Triel Sur Seine (FR)
(86) Numéro de dépôt international: PCT/FR2013/053195
(87) Numéro de publication internationale: WO 2014/106709

(56) Documents cités:
- EP-A2- 2 036 794
- DE-A1- 19 532 129
- DE-A1-102005 010 289
- DE-A1-102012 203 778

## Description

L'invention concerne un procédé de correction d'oscillations de régime pour un train roulant d'un véhicule, un système de correction pour la mise en oeuvre d'un tel procédé et un véhicule hybride comprenant un tel système de correction.

Il existe divers types de systèmes de motorisation hybride électrique, hydraulique, pneumatique, etc... pour les véhicules automobiles. Par exemple, une motorisation hybride thermique-électrique comprend un moteur thermique couplé à une machine électrique. La machine électrique peut fonctionner comme un moteur électrique lorsque celle-ci dispose d'une source d'énergie suffisante permettant de l'alimenter et peut également fonctionner comme un générateur d'énergie électrique lorsque celui-ci est entrainé, généralement par le moteur thermique, pour fournir de l'énergie à divers équipements embarqués du véhicule, par exemple un accumulateur d'énergie, un réseau de tension ou tout autre équipement nécessitant une alimentation électrique.

Selon le degré d'hybridation électrique avec le moteur thermique le système de motorisation peut comprendre une ou plusieurs machines électriques. Dans le cas d'un système de motorisation à plusieurs machines électriques, une machine électrique principale couplée au moteur thermique intervient directement dans la motorisation du véhicule sur les trains roulants du véhicule, c'est à dire le train avant et/ou sur le train arrière, soit en hybridation thermique électrique ou soit en électrique seul. Dans ce dernier cas, on dit alors que le véhicule hybride dispose d'un mode de roulage 100% électrique. Lorsque le moteur électrique fournit du couple en addition du couple du moteur thermique alors le véhicule peut disposer de plusieurs modes de roulage, par exemple un mode de roulage économe en consommation de carburant, un mode de roulage dit sportif pour fournir une puissance élevée en cas de demande du conducteur, mais cela se fait au détriment de la consommation, et un mode de roulage avec les quatre roues motrices pour maximiser la tenue de route. Quel que soit le mode de roulage, il est alors nécessaire de coupler le moteur électrique avec un accumulateur d'énergie électrique de grande capacité pour disposer suffisamment d'une autonomie d'énergie et d'une puissance électrique pour ce type de véhicule.

Le système de motorisation peut également comprendre une machine électrique secondaire attelée au moteur thermique. Cette machine électrique secondaire fonctionne principalement comme un générateur afin de prélever du couple sur le moteur thermique et fournir en énergie divers équipements électroniques, par exemple des accumulateurs d'énergie, les calculateurs de bords et les équipements de l'habitacle.

Lorsqu'une motorisation hybride comprend plusieurs machines électriques et un moteur thermique on comprend qu'une telle architecture requière une intelligence pour coordonner l'ensemble des équipements. Pour cela une motorisation hybride comprend également un dispositif de contrôle, dit également superviseur (également ECU pour « Electronique Control Unit » en anglais), pour calculer les consignes de couple du moteur et des machines électriques, notamment en fonction des besoins du conducteur pour la conduite du véhicule, des limitations organiques de chaque composant et des besoins en énergie électrique. Ainsi le contrôle coordonné des équipements du système de motorisation permet de mettre en route des véhicules émettant moins de gaz polluants et ayant une consommation en énergie fossile réduite.

Des désagréments de roulage peuvent apparaître sur le système de motorisation d'un véhicule au niveau des trains avant et arrière du véhicule. Les oscillations de régime des trains roulants sont des désagréments pouvant être ressentis par le conducteur. Il est donc important d'atténuer un maximum ces oscillations de régime.

Pour cela, le superviseur comprend également une fonction appelée agrément curatif. Cette fonction sert à contrer les oscillations de régime en injectant du couple en opposition de phase avec le régime du train roulant au moyen du moteur thermique. Le superviseur comprend les moyens nécessaires à la détection des oscillations et au calcul des couples correcteurs à appliquer par le moteur thermique. Selon l'architecture choisie ces moyens sont centralisés au niveau du superviseur ou peuvent être décentralisés au niveau d'un calculateur spécifique au moteur thermique.

Or, le couple réalisé par un moteur thermique de type essence dépend de la quantité de carburant injectée, de la quantité d'air présente dans la chambre de combustion et de l'avance à l'allumage pour déclencher la combustion. A iso consommation, le moteur fournit un couple maximal sur son avance optimale. Son rendement est donc maximal au point d'avance optimal, on parle du pilotage du moteur en bouclage. Pour augmenter ou diminuer le couple on peut modifier l'avance ce qui présente une dynamique très rapide et un temps de réponse instantané, ou modifier la quantité d'air via l'ouverture ou la fermeture de papillon ou l'utilisation du turbocompresseur, cependant cela présente une dynamique très lente avec des temps de réponse supérieurs à 500 ms. La modification de l'avance à l'allumage détériore le rendement du moteur, et donc détériore la consommation du véhicule hybride. On parle alors du pilotage du moteur en débouclage. La modification du couple par le circuit d'air n'est pas instantanée du fait de la dynamique lente de la boucle d'air. La dynamique de cette variation de couple ne permet généralement pas de suivre la volonté du conducteur de façon acceptable.

Le moteur thermique essence fonctionne à son couple maximal lorsque celui-ci est en bouclage. Pour réaliser le couple demandé par la fonction d'agrément curatif, il faut dégrader l'avance à l'allumage en débouclant. Cette stratégie entraine donc une surconsommation et fait chauffer le catalyseur. De plus, un moteur essence ne peut fournir plus que le couple optimal, il est alors impossible de rajouter du couple. La fonction d'agrément curatif ne peut qu'en enlever, ce qui diminue son impact et dégrade l'agrément de conduite.

Par ailleurs, il est connu dans l'état de l'art la demande de brevet FR2910198 décrivant un procédé de commande de correction d'oscillations sur l'arbre de transmission d'un véhicule. Ce procédé comprend une étape d'agrément curatif de couple, cet agrément étant appliqué par une machine électrique de manière à ne pas dégrader l'avance à l'allumage du moteur thermique. Selon ce procédé l'agrément de couple est toujours appliqué par la machine électrique. Or, il n'est pas toujours possible que le superviseur fasse intervenir la machine électrique pour fournir un couple de correction. Par exemple, lorsque le niveau de charge de la batterie du véhicule n'est pas suffisant pour fournir la quantité d'énergie nécessaire à la génération du couple.

Il existe donc un besoin d'améliorer l'agrément curatif d'un système de motorisation afin qu'il puisse être appliqué dans la majorité des situations de roulage du véhicule.

Plus précisément, l'invention concerne un procédé de correction d'oscillations de régime pour un train roulant d'un véhicule comprenant les étapes successives suivantes :
- une étape de détection d'oscillations de régime du train,
- une étape de calcul comprenant le calcul d'un couple correcteur à appliquer au train par un moyen de correction,
- une étape d'activation d'une phase de correction appliquée par ledit moyen de correction sur le train selon le couple correcteur calculé.

Selon l'invention, le procédé comprend en outre, préalablement à l'étape de calcul, une étape de sélection du moyen de correction destiné à appliquer le couple correcteur parmi au moins deux moyens de correction en fonction d'au moins une donnée de statut du véhicule.

Préférentiellement, l'étape de calcul comprend en outre le calcul d'une durée de la phase de correction, la sélection du moyen de correction étant maintenue pendant la durée de correction.

Selon l'une quelconque des variantes du procédé, la donnée de statut est choisie parmi l'une quelconque des données suivantes ou une combinaison des données suivantes représentatives :
- d'un niveau de charge d'un accumulateur d'énergie du véhicule,
- d'un mode de roulage du véhicule,
- du régime du train,
- du rapport d'une boîte de vitesse du véhicule,
- d'un état de saturation d'un moyen de correction.

L'invention concerne également un système de correction d'oscillations de régime pour un train roulant d'un véhicule comportant un premier moyen de correction piloté par une première consigne de couple et un moyen de commande pour piloter le dit moyen de correction. Selon l'invention, le système comprend en outre un deuxième moyen de correction piloté par une deuxième consigne de couple et le moyen de commande comprend également un moyen pour sélectionner le premier moyen de correction ou le deuxième moyen de correction en fonction d'au moins une donnée de statut du véhicule et un moyen pour calculer un premier et un deuxième couple correcteur appliqués au train respectivement par le premier et le deuxième moyen de correction pour atténuer les oscillations.

Selon une variante, le premier moyen de correction est un moteur thermique apte à entrainer le train à un régime commandé.

Selon l'une quelconque des variantes précédentes, le deuxième moyen de correction est une machine électrique apte à entrainer le train à un régime commandé.

Selon l'une quelconque des variantes précédentes, la donnée de statut est une donnée représentative d'un niveau de charge d'un accumulateur d'énergie du véhicule.

Selon l'une quelconque des variantes précédentes, les moyens de calcul du moyen de commande sont répartis parmi les moyens de corrections.

L'invention concerne un système de correction selon l'une quelconque des variantes précédentes, dans lequel le moyen de commande est apte à mettre en oeuvre le procédé de correction selon l'une quelconque des variantes précédentes. L'invention concerne également un véhicule hybride comprenant un tel système.

Grâce à l'invention, la fonction d'agrément curatif peut être mise en oeuvre par au moins deux moyens de correction distincts ayant des performances complémentaires, par exemple au regard du régime du train sur lequel ils appliquent leur correction. L'invention évite les désagréments issus des oscillations du régime du train roulant du véhicule tout en améliorant les performances de consommation du véhicule. La machine électrique a pour avantage de pouvoir apporter un couple correcteur en positif et en négatif et à bas régime. Ceci permet de conserver le pilotage en bouclage du moteur thermique. En haut régime, il peut être plus avantageux d'exploiter le moteur thermique.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 représente un schéma des organes fonctionnels d'un système de motorisation pour un véhicule hybride.
- la figure 2 représente un graphique représentant les oscillations de régime d'un train roulant et les consignes de couple correcteurs des moyens de correction du système de correction selon l'invention.
- la figure 3 représente un organigramme décisionnel pour sélectionner un moyen de correction des oscillations.

L'invention s'applique plus particulièrement aux véhicules hybrides dotés d'un système de motorisation, couramment appelé aussi groupe motopropulseur, comportant au moins deux moyens de motorisation des trains roulants du véhicules. L'invention a pour objectif d'améliorer le fonctionnement de la fonction d'agrément curatif du système de motorisation. Pour cela, elle propose un procédé de correction des oscillations de régime d'un train roulant et le système de correction associé.

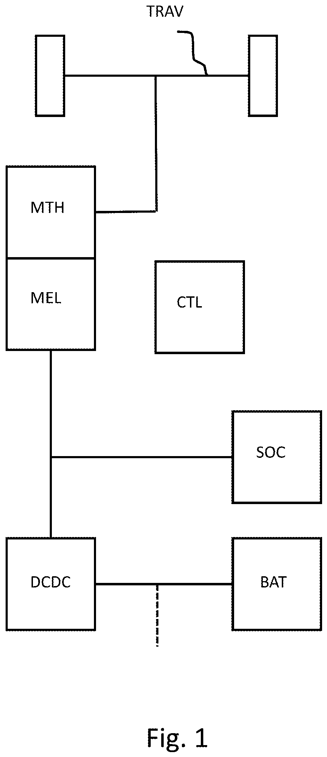

La figure 1 représente un schéma d'un système de motorisation hybride comprenant le système de correction des oscillations de régime du train avant TRAV du véhicule. Ce système de motorisation comprend le train avant TRAV entrainé par un moteur thermique MTH et une machine électrique principale montée sur un train arrière (non représentés sur le schéma de la figure 1).

Le moteur thermique MTH génère un couple d'entrainement pour le train avant sur réception d'une consigne. Le train avant TRAV comprend également une boite de vitesse (non représentée sur la figure 1). Le système de motorisation est dit hybride car la machine électrique principale peut entrainer le train arrière au moyen d'un mécanisme de crabotage (également non représenté sur la figure 1). Le moteur thermique est de type essence dans ce mode de réalisation.

Cette machine électrique principale agit principalement comme un moteur électrique pour assister le moteur thermique pour la motorisation du véhicule, ou peut même selon un autre mode de roulage participer seul à la mobilité du véhicule.

Une machine électrique secondaire MEL est attelée au moteur thermique MTH, celle-ci pouvant être entraînée par le moteur thermique MTH afin de générer de l'énergie électrique. La machine électrique MEL fonctionne alors comme un générateur afin de transmettre une quantité d'énergie électrique à divers équipements électroniques.

Dans le mode de réalisation représenté en figure 1, un premier équipement est un premier accumulateur d'énergie SOC faisant partie d'un réseau haute tension du véhicule. Ce premier accumulateur d'énergie SOC, appelé aussi batterie, peut alimenter en énergie la machine électrique principale afin que celle-ci génère un couple d'entrainement pour le train arrière. L'accumulateur peut être une technologie de type nickel ou lithium-ion par exemple.

Un deuxième équipement est un convertisseur de tension DCDC alimentant un réseau de tension, plus précisément un réseau basse tension, 12V étant la tension couramment utilisée.

Ce réseau est un réseau basse tension sur lequel les équipements de bord de l'habitacle sont alimentés, les calculateurs du véhicule ainsi qu'un deuxième accumulateur d'énergie basse tension BAT. Il est bien entendu que d'autres équipements peuvent être connectés à ce réseau de tension. L'accumulateur BAT permet d'emmagasiner de l'énergie pour alimenter les équipements du réseau RES.

Le système de motorisation comprend également un dispositif de contrôle CTL, appelé également superviseur, ayant le rôle de composant électronique intelligent afin de coordonner le moteur thermique MTH, la machine électrique principale, la machine électrique secondaire MEL, l'accumulateur SOC, le convertisseur DCDC et l'accumulateur BAT. Ce dispositif de contrôle peut être un calculateur de type ASIC (« Application-Specific Integrated Circuit » en anglais) devant résister à des contraintes de température et de fiabilité fortes. Le dispositif de contrôle peut être constitué de un ou plusieurs calculateurs selon la stratégie de décentralisation de l'intelligence. Par exemple, des calculs spécifiques à un composant peuvent être exécutés au niveau du composant même. On comprend donc que le dispositif de contrôle de l'invention ne se limite pas à un unique composant de calcul mais peut être un ou plusieurs calculateurs du système, de technologie ASIC ou autres équivalentes pour réaliser les fonctions de calcul. Plus précisément, le dispositif de contrôle CTL réalise les calculs de consigne du moteur et des machines électriques. Il s'agit notamment des calculs des consignes de couple et du contrôle moteur en bouclage ou débouclage. Les fonctions réalisées dans le cadre de l'invention seront décrites plus précisément dans la suite de la description.

Par ailleurs, le système de motorisation présenté dans ce mode de réalisation permet au véhicule de rouler selon quatre modes de fonctionnement distincts. Un premier mode est un mode minimisant la consommation de carburant, un deuxième mode est un mode maximisant les performances du véhicule au détriment de la consommation, un troisième mode est un mode ayant les quatre roues motrices permettant de maximiser la tenue de route du véhicule et un quatrième mode est un mode de roulage tout électrique. Toutefois, l'invention peut s'appliquer à un système de motorisation n'autorisant le fonctionnement que d'une partie de ces modes de roulage.

Afin de coordonner l'ensemble du système de motorisation pour réaliser les instructions du conducteur, le dispositif de contrôle CTL élabore des fonctions pour commander les équipements. Parmi ces fonctions, le dispositif de contrôle CTL comprend :
- une fonction d'interface de la volonté du conducteur permettant de récolter les informations du véhicule. Cette fonction permet de transmettre les données du véhicule au dispositif de contrôle CTL,
- une fonction de traduction de la volonté d'accélérer du conducteur en une consigne de couple roue. Le dispositif de contrôle CTL calcule le couple de roue nécessaire pour réaliser l'instruction du conducteur,
- une fonction de calcul des limitations organiques, plus précisément de couple, des équipements de la motorisation, et en particulier le moteur thermique et les machines électriques principale et secondaire MEL,
- une fonction de calcul du couple de chaque organe pour fournir le couple roue que désire le conducteur et de répartition des couples entre les différents fournisseurs de couple,
- une fonction de transmission d'une consigne de couple vers le moteur thermique MTH,
- une fonction de transmission d'une consigne de couple vers la machine électrique secondaire MEL et d'une consigne de couple vers la machine électrique principale.

Les consignes de couples à destination du moteur thermique MTH et des machines électriques dépendent de la volonté du conducteur, du mode de roulage du véhicule (sportif, auto, 100% électrique etc..) et de données de statut des équipements électroniques dont l'alimentation dépend du système de motorisation, notamment le niveau de la quantité d'énergie des batteries. Par exemple, si le niveau de la quantité d'énergie de l'accumulateur SOC est faible, le dispositif de contrôle CTL calculera les consignes de couple de sorte que la machine électrique MEL fournisse un couple suffisant pour recharger l'accumulateur SOC.

Le système de correction des oscillations du train avant comprend un moyen de commande pour piloter au moins un premier moyen de correction et un second moyen de correction. Selon ce mode de réalisation, le moyen de commande est le dispositif de contrôle CTL du système de motorisation comprenant, en plus des fonctions de calcul des consignes de couple du moteur thermique MTH et MEL, une fonction d'agrément curatif du régime du train avant. Cette fonction d'agrément curatif calcule des couples correcteurs à appliquer par les moyens de correction. Dans ce mode de réalisation, ces moyens de corrections sont les mêmes moyens entrainant le train avant à un régime commandé par le dispositif de contrôle CTL, c'est à dire le moteur thermique MTH et la machine électrique secondaire MEL. Ainsi le premier moyen de correction est le moteur thermique MTH et le second moyen de correction est la machine électrique secondaire MEL. Il est possible que la machine électrique MEL et le moteur thermique participent à l'agrément curatif du train avant car la machine électrique MEL et le moteur thermique MTH sont reliés par une courroie sur le train avant.

De plus, selon l'invention la fonction d'agrément curatif comprend une fonction de sélection du moyen de correction chargé de fournir le couple correcteur au train pour diminuer les oscillations. Plus précisément, en fonction de données de statut du véhicule, le dispositif de contrôle CTL sélectionne le moteur thermique MTH ou la machine électrique MEL pour transmettre un couple correcteur en opposition de phase avec les oscillations du train avant.

Ainsi le dispositif de contrôle CTL calcule un couple correcteur à appliquer par le premier moyen de correction MTH ou par le deuxième moyen de correction MEL selon le résultat de la sélection. Selon une variante, le dispositif de contrôle calcule les deux couples correcteurs respectifs et active l'un ou l'autre des moyens de correction pour réaliser une phase de correction.

Selon l'architecture matérielle du système de motorisation, les calculateurs utilisés pour élaborer ces fonctions peuvent être centralisés au niveau du superviseur ou répartis au niveau des équipements à commander, il s'agit alors de décentraliser des équipements électroniques de contrôle. Ainsi, des équipements peuvent réaliser des calculs de fonctions qui leur sont propres et les calculateurs décentralisés peuvent communiquer entre eux et avec le superviseur par des bus de communications de données, par exemple de type bus CAN (acronyme de « Contrôler Area Network » en anglais) ou de type bus FlexRay™.

Ainsi, les fonctions d'agrément curatif peuvent être localisées au niveau du dispositif de contrôle CTL, au niveau d'un calculateur présent dans le moteur MTH, ce calculateur pouvant ensuite envoyer des données vers la machine électrique MEL, ou au niveau d'un calculateur de la machine électrique MEL. Chacun de ces calculateurs est équipé des moyens de communication permettant de recevoir les données nécessaires pour le calcul de l'agrément curatif.

L'invention concerne donc également un procédé de correction des oscillations du train avant. Ce procédé comprend les étapes suivantes :
- une étape de détection d'oscillations de régime du train TRAV,
- une étape de sélection du moyen de correction, entre le moteur thermique MTH et la machine électrique MEL, en fonction d'au moins une donnée de statut du véhicule,
- une étape de calcul comprenant le calcul d'un couple correcteur à appliquer au train par le moyen de correction sélectionné,
- une étape d'activation d'une phase de correction appliquée par ledit moyen de correction sélectionné sur le train selon le couple correcteur calculé.

De préférence, durant une phase de correction, le dispositif de contrôle active le même moyen de correction, ceci afin de conserver une correction optimale des oscillations. Pour cela, la sélection du moteur thermique MTH ou de la machine électrique est réalisée une fois que des oscillations ont été détectées et avant le début de la phase de correction.

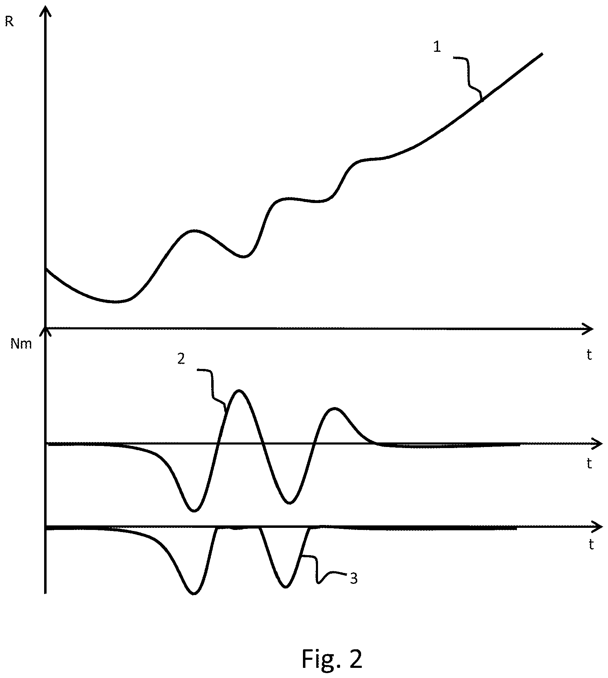

La figure 2 est un graphique comprenant une courbe 1 représentant le régime du train avant. L'axe des abscisses représente les données temporelles et l'axe des ordonnées le régime du train avant. Dans ce cas d'étude, des oscillations de régime sont présentes sur la courbe 1. La courbe 2 et la courbe 3 représentent des calculs de correction de couple appliqués par la machine électrique MEL et des calculs de correction de couple appliqués par le moteur thermique MTH respectivement. L'axe des ordonnées représente les valeurs de couple en Nm. Une correction appliquée par la machine électrique MEL permet d'ajouter du couple en opposition de phase pour chaque pic d'oscillation, tandis que le moteur thermique MTH ne peut qu'ajouter du couple en opposition de phase que négativement. La raison de cette limitation provient du fait que le moteur est préférentiellement commandé en bouclage et lorsqu'il est au point d'avance optimale il ne peut plus fournir du couple positif. Par conséquent, le procédé de correction sélectionnera préférentiellement la machine électrique MEL pour corriger les oscillations. En effet, la machine électrique est réversible, elle peut donc ajouter ou enlever du couple, contrairement au moteur thermique lorsque celui-ci est piloté en bouclage. Le fait de maintenir le moteur thermique en bouclage permet d'optimiser la consommation et de préserver les composants, comme par exemple le catalyseur. De plus, l'agrément curatif exécuté par la machine électrique permet d'être plus réactif à bas régime puisque la machine électrique est pilotée en temporelle, échantillonnage à 10 ms, tandis que le moteur est piloté au point moteur haut. Il y a donc un gain de réactivité selon le type de moteur thermique utilisé.

Toutefois, il n'est pas toujours possible de sélectionner la machine électrique MEL, par exemple lorsque le niveau de charge de l'accumulateur d'énergie SOC alimentant la machine électrique n'est pas suffisant.

En conséquence, le procédé selon l'invention comprend une stratégie de sélection du moyen de correction qui dépend de données de statut du véhicule.

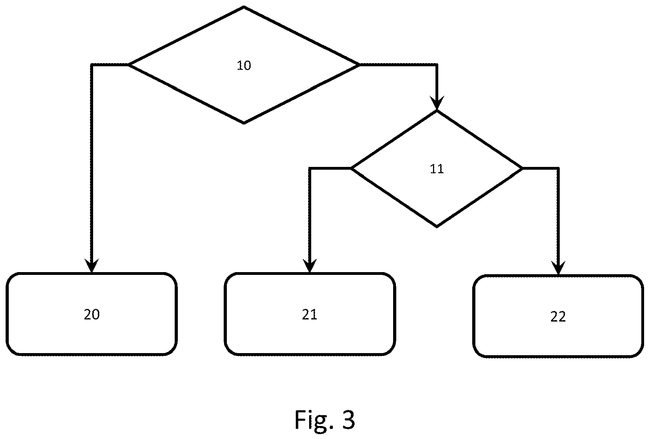

La figure 3 est un organigramme représentant un exemple de stratégie de sélection du moyen de correction entre le moteur thermique MTH et la machine électrique MEL mise en oeuvre par le dispositif de contrôle CTL.

A une étape 10 du processus de sélection, le dispositif de contrôle CTL exécute une vérification d'une donnée représentant un statut dans lequel on requière une optimisation de la consommation du véhicule, par exemple la donnée informant que le véhicule est en mode de roulage auto donnant la priorité à la consommation. Si la vérification est positive, alors on sélectionne la machine électrique pour effectuer la correction de couple. A une étape 20, la machine électrique MEL est sélectionnée et le couple correcteur à appliquer par la machine électrique est calculé. Si la vérification est négative, alors à une étape 11 le dispositif de contrôle procède à une deuxième vérification d'une deuxième donnée représentant le statut de saturation du moteur thermique MTH. Si celui-ci est saturé il ne peut pas fournir du couple positif et par conséquent il n'est pas en mesure de traiter certains pics d'oscillations de régime. Donc, si la vérification est positive, c'est à dire que le moteur est saturé, le dispositif de contrôle sélectionne à une étape 21 la machine électrique MEL pour effectuer la correction de couple. Si la vérification est négative, à une étape 22 on procède à une étape de calcul prenant en compte diverses données pour choisir la machine électrique MEL ou le moteur thermique MTH. Ces données peuvent être le régime du train, le rapport de la boite de vitesse, le niveau de saturation.

A ces étapes de vérification s'ajoute par exemple la vérification du niveau de charge de l'accumulateur d'énergie SOC pour s'assurer que la machine électrique MEL peut fournir du couple. Par ailleurs, dans un autre cas il peut être préférable d'utiliser le moteur thermique MTH comme moyen de correction à haut régime où une synchronisation au point moteur haut est plus réactive qu'une synchronisation en 10 ms, correspondant au pilotage en temporel de la machine électrique MEL.

L'invention s'applique à tout type de véhicules disposant d'un groupe motopropulseur hybride. Le système et procédé de correction selon l'invention peuvent s'appliquer aux trains roulants disposant d'au moins deux moyens de motorisation du train agissant comme les moyens de corrections des oscillations.

## Revendications

1. Procédé de correction d'oscillations de régime pour un train roulant (TRAV) d'un véhicule comprenant les étapes successives suivantes :
- une étape de détection d'oscillations de régime du train,
- une étape de calcul comprenant le calcul d'un couple correcteur à appliquer au train par un moyen de correction (MTH ; MEL),
- une étape d'activation d'une phase de correction appliquée par ledit moyen de correction (MTH ; MEL) sur le train selon le couple correcteur calculé,
le procédé étant **caractérisé en ce qu'**il comprend en outre, préalablement à l'étape de calcul, une étape de sélection du moyen de correction (MTH ; MEL) destiné à appliquer le couple correcteur parmi au moins deux moyens de correction en fonction d'au moins une donnée de statut du véhicule.

2. Procédé selon la revendication **1,** dans lequel l'étape de calcul comprend en outre le calcul d'une durée de la phase de correction, la sélection du moyen de correction (MTH ; MEL) étant maintenue pendant la durée de correction.

3. Procédé selon l'une quelconque des revendications **1 ou 2,** dans lequel la donnée de statut est choisie par l'une quelconque des données suivantes ou une combinaison des données suivantes représentatives :
- d'un niveau de charge d'un accumulateur d'énergie (SOC) du véhicule,
- d'un mode de roulage du véhicule,
- du régime du train (TRAV),
- du rapport d'une boîte de vitesse du véhicule,
- d'un état de saturation d'un moyen de correction (MTH).

4. Système de correction d'oscillations de régime pour un train roulant (TRAV) d'un véhicule comportant un premier moyen de correction (MTH) piloté par une première consigne de couple et un moyen de commande (CTL) pour piloter le dit moyen de correction, **caractérisé en ce qu'**il comprend en outre un deuxième moyen de correction (MEL) piloté par une deuxième consigne de couple et **en ce que** le moyen de commande comprend également un moyen pour sélectionner le premier moyen de correction (MTH) ou le deuxième moyen (MEL) de correction en fonction d'au moins une donnée de statut du véhicule et un moyen pour calculer un premier et un deuxième couple correcteur appliqués au train respectivement par le premier et le deuxième moyen de correction pour atténuer les oscillations.

5. Système selon la revendication **4,** dans lequel le premier moyen de correction est un moteur thermique (MTH) apte à entrainer le train à un régime commandé.

6. Système selon l'une quelconque des revendications **4 à 5,** dans lequel le deuxième moyen de correction est une machine électrique (MEL) apte à entrainer le train à un régime commandé.

7. Système selon la revendication **6,** dans lequel la donnée de statut est une donnée représentative d'un niveau de charge d'un accumulateur d'énergie (SOC) du véhicule.

8. Système selon l'une quelconque des revendications **4 à 7,** dans lequel les moyens de calcul du moyen de commande (CTL) sont répartis parmi les moyens de corrections (MTH, MEL).

9. Système selon l'une quelconque des revendications **4 à 8,** dans lequel le moyen de commande est apte à mettre en oeuvre le procédé selon l'une quelconque des revendications 1 à 3.

10. Véhicule hybride comprenant un système selon la revendication **9.**

## Patentansprüche

1. Verfahren zur Korrektur von Drehzahlschwingungen für ein Fahrgestell (TRAV) eines Fahrzeugs, das die folgenden aufeinanderfolgenden Schritte umfasst:
- einen Schritt zum Erfassen von Drehzahlschwingungen des Fahrgestells,
- einen Rechenschritt, der das Berechnen eines Korrekturdrehmoments umfasst, das an das Fahrgestell durch ein Korrekturmittel (MTH; MEL) anzuwenden ist,
- einen Schritt des Aktivierens einer Korrekturphase, die von dem Korrekturmittel (MTH; MEL) an das Fahrgestell gemäß dem berechneten Korrekturdrehmoment angewandt wird,
Verfahren **dadurch gekennzeichnet, dass** es außerdem vor dem Berechnungsschritt einen Schritt der Auswahl des Korrekturmittels (MTH; MEL), das dazu bestimmt ist, das Korrekturdrehmoment anzuwenden, aus mindestens zwei Korrekturmitteln in Abhängigkeit von mindestens einer Zustandsinformation des Fahrzeugs umfasst.

2. Verfahren nach Anspruch 1, wobei der Berechnungsschritt außerdem die Berechnung einer Dauer der Korrekturphase umfasst, wobei die Auswahl des Korrekturmittels (MTH; MEL) während der Korrekturdauer aufrechterhalten wird.

3. Verfahren nach einem der Ansprüche 1 oder 2, wobei die Zustandsinformation durch eine beliebige der folgenden Daten oder eine Kombination der folgenden repräsentativen Daten ausgewählt wird:
- ein Ladeniveau eines Energiespeichers (SOC) des Fahrzeugs,
- einen Fahrmodus des Fahrzeugs,
- eine Drehzahl des Fahrgestells (TRAV),
- einen Gang eines Schaltgetriebes des Fahrzeugs,
- einen Sättigungszustand eines Korrekturmittels (MTH).

4. Verfahren zur Korrektur von Drehzahlschwingungen für ein Fahrgestell (TRAV) eines Fahrzeugs, das ein erstes Korrekturmittel (MTH) umfasst, das von einem ersten Drehmomentsollwert gesteuert wird, und ein Steuermittel (CTL), um das Korrekturmittel zu steuern, **dadurch gekennzeichnet, dass** es außerdem ein zweites Korrekturmittel (MEL) umfasst, das von einem zweiten Drehmomentsollwert gesteuert wird, und dass das Steuermittel auch ein Mittel zum Auswählen des ersten Korrekturmittels (MTH) oder des zweiten Korrekturmittels (MEL) in Abhängigkeit von mindestens einer Zustandsinformation des Fahrzeugs umfasst, und ein Mittel zum Berechnen eines ersten und eines zweiten Korrekturdrehmoments, die auf das Fahrgestell jeweils durch das erste und zweite Korrekturmittel zum Dämpfen der Schwingungen angewandt werden.

5. System nach Anspruch 4, wobei das erste Korrekturmittel eine Brennkraftmaschine (MTH) ist, die angepasst ist, um das Fahrgestell mit einer gesteuerten Drehzahl anzutreiben.

6. System nach einem der Ansprüche 4 bis 5, wobei das zweite Korrekturmittel eine Elektromaschine (MEL) ist, die angepasst ist, um das Fahrgestell mit einer gesteuerten Drehzahl anzutreiben.

7. System nach Anspruch 6, wobei die Zustandsinformation eine Information ist, die für ein Ladeniveau eines Energiespeichers (SOC) des Fahrzeugs repräsentativ ist.

8. System nach einem der Ansprüche 4 bis 7, wobei die Mittel zum Berechnen des Steuermittels (CTL) unter den Korrekturmitteln (MTH, MEL) verteilt sind.

9. System nach einem der Ansprüche 4 bis 8, wobei das Steuermittel geeignet ist, um das Verfahren nach einem der Ansprüche 1 bis 3 umzusetzen.

10. Hybridfahrzeug, das das System nach Anspruch 9 umfasst.

## Claims

1. A method for correcting fluctuations in speed for a running gear (TRAV) of a vehicle including the following successive steps:
- a step of detection of fluctuations in speed of the running gear,
- a calculation step including the calculation of a corrective torque to be applied to the running gear by a correction means (MTH; MEL),
- an activation step of a correction phase applied by said correction means (MTH; MEL) on the running gear according to the calculated corrective torque,
the method being **characterized in that** it further includes, prior to the calculation step, a selection step of the correction means (MTH; MEL) intended to apply the corrective torque from at least two correction means as a function of at least one piece of data relating to the status of the vehicle.

2. The method according to claim 1, in which the calculation step further includes the calculation of a duration of the correction phase, the selection of the correction means (MTH; MEL) being maintained for the correction duration.

3. The method according to any one of claims 1 or 2, in which the status data is selected from any one of the following pieces of data or a combination of the following representative pieces of data:
- of a charge level of an energy accumulator (SOC) of the vehicle,
- of a running mode of the vehicle,
- of the speed of the running gear (TRAV),
- of the ratio of a gearbox of the vehicle,
- of a saturation state of a correction means (MTH).

4. A system for correcting fluctuations in speed for a running gear (TRAV) of a vehicle comprising a first correction means (MTH) driven by a first torque setpoint and a control means (CTL) for driving said correction means, **characterized in that** it further includes a second correction means (MEL) driven by a second torque setpoint and **in that** the control means also includes a means for selecting the first correction means (MTH) or the second correction means (MEL) as a function of at least one item of data relating to the status of the vehicle and a means for calculating a first and a second correction torque applied to the running gear respectively by the first and the second correction means so as to reduce the fluctuations.

5. The system according to claim 4, in which the first correction means is a heat engine (MTH) able to drive the running gear at a controlled speed.

6. The system according to any one of claims 4 to 5, in which the second correction means is an electric machine (MEL) able to drive the running gear at a controlled speed.

7. The system according to claim 6, in which the item of data relating to status is a representative item of data of a charge level of an energy accumulator (SOC) of the vehicle.

8. The system according to any one of claims 4 to 7, in which the calculation means of the control means (CTL) are distributed among the correction means (MTH, MEL).

9. The system according to any one of claims 4 to 8, in which the control means is able to implement the method according to any one of claims 1 to 3.

10. A hybrid vehicle including a system according to claim 9.
